# EUROPÄISCHE PATENTANMELDUNG

(11) **EP 1 063 640 A2**
(43) Veröffentlichungstag der Anmeldung: **27.12.2000**
(21) Anmeldenummer: 00112537.6
(22) Anmeldetag: 14.06.2000
(51) Int. Cl.: G11B 7/00

(54) **Verfahren zum optischen Prüfen der Zwischenschicht eines wenigstens dreischichtigen flächigen Gegenstands**

(30) Priorität: 25.06.1999 DE 19929118
(71) Anmelder: Basler Aktiengesellschaft, 22926 Ahrensburg (DE)
(72) Erfinder: Kaupp, Ansgar, Dr., 22926 Ahrensburg (DE)
(74) Vertreter: Jaeschke, Rainer, Dipl.-Ing.

(57) **Zusammenfassung**

Die Erfindung betrifft ein Verfahren zur Inspektion eines im wesentlichen flächigen Gegenstandes, der wenigstens zwei gegenüberliegende zumindest teilweise transparente äußere Schichten und wenigstens eine zwischen diesen Schichten angeordnete Zwischenschicht aufweist. Insbesondere betrifft die Erfindung die optische Prüfung von optischen Datenträger mit entsprechendem Aufbau, beispielsweise einer DVD. Gemäß der Erfindung wird ein Verfahren vorgeschlagen, bei welchem die sich gegenüberliegenden Seiten des Gegenstandes mit wenigstens zwei optischen Empfängern abgetastet wird, wobei die Daten der aufgenommenen Bildpunkte des einen optischen Empfängers zu den Daten der aufgenommenen Bildpunkten des anderen optischen Empfängers derart zugeordnet werden, daß die Daten der sich gegenüberliegenden Punkte des Gegenstandes jeweils einander zugeordnet und ausgewertet werden können. Ein Kennzeichnen eines möglichen Fehlers in der Zwischenschicht erfolgt dann, wenn bei beiden optischen Empfängern die Daten der sich auf gegenüberliegenden Flachseiten des Gegenstandes befindlichen Bildpunkte einem Fehler entsprechen.

## Beschreibung

Die Erfindung betrifft ein Verfahren zur Inspektion eines im wesentlichen flächigen Gegenstandes, der wenigstens zwei gegenüberliegende zumindest teilweise transparente äußere Schichten und wenigstens eine zwischen diesen Schichten angeordnete Zwischenschicht, meist eine Klebeschicht, aufweist. Insbesondere betrifft die Erfindung die optische Prüfung von optischen Datenträger mit entsprechendem Aufbau, beispielsweise einer DVD. Es ist daher im folgenden überwiegend von einer DVD die Rede, ohne daß damit eine Beschränkung verbunden ist.

Es ist bekannt, einen optischen Datenträger, wie eine CD, DVD, CD-R oder dergleichen, optisch abzutasten und die Daten der aufgenommen Bildpunkte auszuwerten, um eventuelle Fehler zu erkennen. Im allgemeinen wird dabei Licht auf die Datenseite aufgebracht, das an der reflektierenden Schicht des optischen Datenträgers reflektiert wird und einen optischen Empfänger, beispielsweise eine CCD-Kamera, belichtet. Das Licht ist häufig als Zeilenlicht ausgebildet, das sich über einen Halbmesser erstrectk. Der optische Datenträger wird um seine Drehachse senkrecht zu der Flachseite gedreht, so daß zum Prüfen der gesamten Seite wenigstens eine vollständige Umdrehung des Datenträgers erforderlich ist.

Bei einer CD ist nur eine Datenseite vorhanden, so daß ein solches Abtasten nur von einer Seite durchgeführt zu werden braucht. Bei einer DVD sind jedoch beide sich gegenüberliegende Flachseiten als Datenseite ausgebildet. Hier muß eine beidseitige Prüfung erfolgen. Grundsätzlich ist eine DVD derart aufgebaut, daß sich zwischen zwei äußeren transparenten Kunststoffschichten, die mit einer reflektierenden Schicht versehen sind, eine Klebeschicht als Zwischenschicht befindet, um die beiden Kunststoffschichten zu verbinden. Dadurch wird ein beidseitig lesbarer Datenträger geschaffen.

Neben dem Prüfen des fertigen Produktes auf eventuelle Fehler ist es auch wichtig, den Fehler zu klassifizieren, um einerseits bestimmte Fehler mit schärferen Prüfkriterien zu behandeln und andererseits gegebenenfalls gezielte Eingriffe in den laufenden Produktionsprozeß durchführen zu können. Dadurch wird ein weiterer Ausschuß vermieden. Wesentlich ist es hierbei unter anderem, eventuelle Fehler in der Zwischenschicht zu erkennen, da solche Fehler sich grundsätzlich auf beide Datenseiten auswirken.

Solche Fehler in der Zwischenschicht sind zwar von beiden Seiten erkennbar, jedoch sieht jeder optische Empfänger nur die jeweils ihm zugewandte Seite der Zwischenschicht und des Fehlers. Ein Fehler in der Zwischenschicht kann daher in der Regel nicht unmittelbar durch sein Muster als solcher klassifiziert werden.

Der Erfindung liegt die Aufgabe zugrunde, ein Verfahren der eingangs geschilderten Art so auszubilden, daß ein Fehler in der Zwischenschicht sicher und zuverlässig als solcher erkannt wird.

Die Aufgabe wird gemäß der Erfindung durch ein Verfahren gelöst, bei welchem die sich gegenüberliegenden Seiten des Gegenstandes mit wenigstens zwei optischen Empfängern abgetastet wird, wobei die Daten der aufgenommenen Bildpunkte des einen optischen Empfängers zu den Daten der aufgenommenen Bildpunkten des anderen optischen Empfängers derart zugeordnet werden, daß die Daten der sich gegenüberliegenden Punkte des Gegenstandes jeweils einander zugeordnet und ausgewertet werden können. Ein Kennzeichnen eines möglichen Fehlers in der Zwischenschicht erfolgt dann, wenn bei beiden optischen Empfängern die Daten der aufgenommenen Bildpunkte der sich auf gegenüberliegenden Flachseiten des Gegenstandes befindlichen Punkte, die grundsätzlich nur von einem optischen Empfänger gesehen werden können, einem Fehler entsprechen. Dies hat den Vorteil, daß sich gegenüberliegende Bildpunkte auch als solche behandelt und deren Daten entsprechend ausgewertet werden können. Weisen beide Datensätze der sich gegenüberliegenden Punkte Werte auf, die einem Fehler entsprechen, ist davon auszugehen, daß sich dieser Fehler in der Zwischenschicht befindet. Der Fehler wird dabei unmittelbar als Fehler in der Zwischenschicht gekennzeichnet und kann entsprechend weiter ausgewertet werden.

Insbesondere ist es möglich, bei einem gekennzeichneten möglichen Fehler in der Zwischenschicht im Zuge der Auswertung eine andere, insbesondere geringere Fehlertoleranz zuzulassen, als bei anderen Fehlern. Hierdurch kann das Inspektionsverfahren genauer arbeiten. Das gesamte Prüfverfahren hat somit eine bessere Effektivität (Yield), da nicht auch die anderen Fehler mit den gleichen schärferen Prüfbedingungen behandelt werden müssen.

Gemäß einer Ausführungsform der Erfindung ist vorgesehen, daß die optischen Empfänger bzw. die aufgenommenen Bilder eine vorbestimmte relative Ausrichtung zueinander oder zu einer Referenzlage aufweisen, wobei die Zuordnung der Daten der aufgenommen Bildpunkte durch eine Transformation der geometrischen Daten bezüglich der relativen Ausrichtung zueinander oder zu der Referenzlage erfolgt. Die Zuordnung kann demnach eine Koordinatentransformation sein, die schnell und einfach durchzuführen ist. Meist wird sich die Koordinatentransformation auf einen Offset beschränken. Es kann dabei zweckmäßig sein, wenn die Ausrichtung eines optischen Empfängers als Referenzlage benutzt wird, so daß nur die Daten der Bildpunkte des anderen optischen Empfängers transformiert zu werden brauchen.

Grundsätzlich kann das optische Abtasten durch beide optische Empfänger zeitgleich erfolgen. Der Gegenstand befindet sich dazu auf nur einer Prüfstation, so daß bei einem zeitgleichen Abtasten der einen und der anderen Seite eine geometrische Zuordnung der Bildpunkte beider Seiten leicht möglich ist. Der zu prüfende Gegenstand kann somit keine weiteren Bewegungen oder Verdrehungen erfahren, die nicht zuverlässig erfaßt werden können und die eine Zuordnung der gegenüberliegenden Punkte unmöglich machen würden. Die sich auf gegenüberliegenden Seiten befindlichen Bildpunkte haben somit stets eine eindeutige geometrische Relation.

Es kann aber auch zweckmäßig sein, wenn die optischen Empfänger derart synchron ausgerichtet sind, daß sich gegenüberliegende Punkte des Gegenstandes gleichzeitig abgetastet werden. Die Daten der Bildpunkte der gegenüberliegenden Punkte des Gegenstandes können dann gleichzeitig abgeglichen werden, und ein möglicher Fehler in der Zwischenschicht kann dann gegebenenfalls vor der eigentlichen Auswertung als solcher markiert werden, so daß die Auswertung dort entsprechend genauer oder mit anderen Kriterien durchgeführt werden kann.

Es kann aber auch vorgesehen werden, daß die sich gegenüberliegenden Seiten zeitlich oder geometrisch aufeinanderfolgend oder teilweise versetzt optisch abgetastet werden, wobei die aufgenommenen Bilddaten der einen Seite oder eines Bereichs dieser einen Seite zumindest solange gespeichert werden, bis die andere Seite oder der dem bereits abgetasteten Bereich der einen Seite gegenüberliegende Bereich der anderen Seite abgetastet sind, und daß dann die Bilddaten der sich gegenüberliegenden Punkte einander zugeordnet und ausgewertet werden. Eine Speicherung der Daten der Bildpunkte ist in der Regel ohnehin erforderlich, so daß hierdurch kein oder kein wesentlicher Zeitverlust durch die Transformation eintreten wird.

Als optische Empfänger können elektronische Kameras, beispielsweise mit einem CCD-Chip, CMOS-Sensor oder dergleichen, eingesetzt werden. Solche lichtempfindlichen Chips weisen eine Vielzahl von Pixeln auf. Es kann gemäß der Erfindung daher vorgesehen werden, daß die optischen Empfänger jeweils wenigstens ein lichtempfindliches Element mit einer Vielzahl von Pixeln aufweisen und so ausgerichtet sind, daß auf gleiche bzw. spiegelbildlich gleiche Pixel der lichtempfindlichen Elemente der optischen Empfänger sich gegenüberliegende Bildpunkte des Gegenstandes abgebildet werden. Dadurch kann die Zuordnung der Daten der sich gegenüberliegenden Punkte vereinfacht werden.

Es kann zweckmäßig sein, wenn wenigstens ein optischer Empfänger ein zeilenförmiges lichtempfindliches Element aufweist. Hier kann die Bestimmung der relativen Ausrichtung zueinander bzw. zu einer Referenzlage sehr leicht erfolgen. Die Transformation der Daten ist entsprechend einfach durchzuführen. Es ist aber grundsätzlich auch möglich, daß wenigstens ein optischer Empfänger ein matrixförmiges lichtempfindliches Element aufweist.

Die Anordnung der optischen Empfänger in Bezug auf den Gegenstand ist grundsätzlich beliebig, solange eine eindeutige Zuordnung zueinander und zu dem Gegenstand möglich bleibt. Es ist daher zweckmäßig, wenn die optischen Empfänger auf gegenüberliegenden Seiten des Gegenstandes angeordnet sind. Grundsätzlich ist aber auch der Einsatz von Spiegelelementen möglich, die die beiden Seiten des Gegenstandes auf nebeneinander liegende optische Empfänger leiten. Die Ausrichtung und Anordnung der optischen Empfänger im einzelnen hängt jedoch in erster Linie von den räumlichen Bedingungen der Produktionsvorrichtung ab, in die das Inspektionssystem integriert ist.

Die Erfindung wird im folgenden anhand der schematischen Zeichnung näher erläutert. Es zeigen:
- Fig. 1: einen schematischen Aufbau eines Inspektionssystems zur Durchführung des Verfahrens gemäß der Erfindung,
- Fig. 2 a, b: die erzeugten Bilder eines runden Gegenstandes mit dem Verfahren gemäß der Erfindung und
- Fig. 3 a, b: die erzeugten Bilder eines runden Gegenstandes mit einem Verfahren gemäß dem Stand der Technik.

Die in der Zeichnung dargestellte Vorrichtung zum Prüfen eines Gegenstandes 11 weist zwei optische Empfänger 12, 13 auf, die sich auf gegenüberliegenden Seiten des Gegenstandes befinden. Die optischen Empfänger können als elektronische Kameras ausgebildet sein. Der Gegenstand weist zwei äußere, im wesentlichen durchsichtige Schichten 14, 15 und eine dazwischen angeordnete Schicht 16 auf. Diese Schicht 16 kann an sich mehrere Schichten aufweisen. Grundsätzlich ist der Aufbau beispielsweise einer DVD derart, daß die äußeren Kunststoff schichten 14, 15 auf den Innenseiten jeweils mit einer nicht näher dargestellten reflektierenden Schicht versehen sind, die über eine mittlere Klebeschicht, die der Zwischenschicht 16 entspricht, zusammengehalten werden. Bei anderen mehrschichtigen Gegenständen kann diese Zwischenschicht auch ganz oder teilweise oder zumindest in Blickrichtung der optischen Abtastung undurchsichtig oder reflektierend sein, so daß eine Koordination der sich gegenüberliegenden Punkte grundsätzlich nicht ohne weiteres möglich ist.

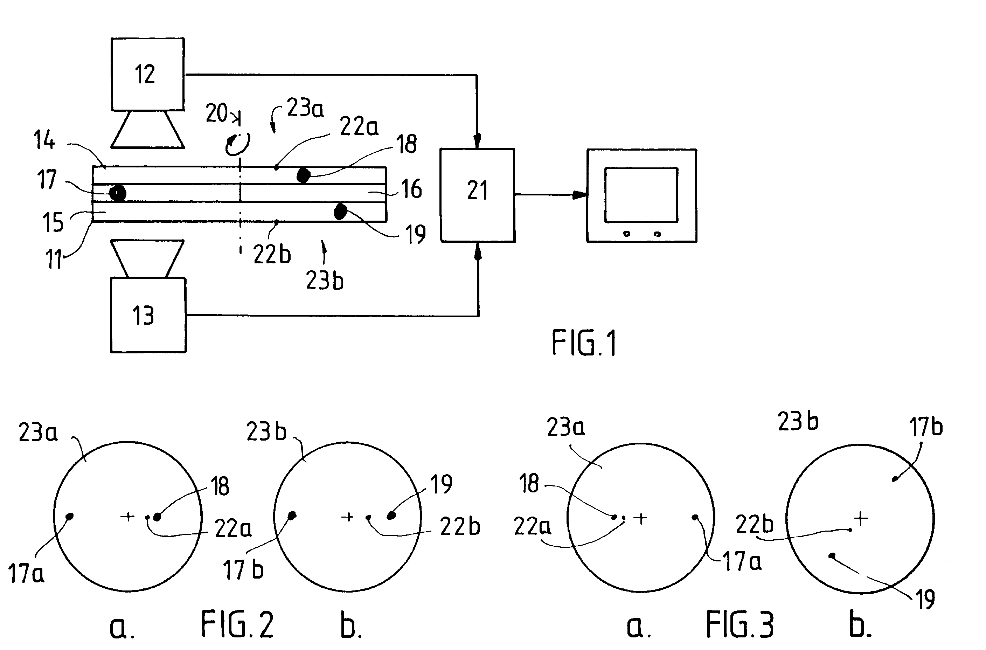

Es sind in der Zeichnung schematisch ein Fehler 17 in der Zwischenschicht 16, ein Fehler 18 in der äußeren Schicht 14 und eine Fehler 19 in der dieser gegenüberliegenden äußeren Schicht 15 dargestellt. Zur Inspektion des Gegenstandes wird dieser in der Regel durch ein nicht dargestelltes Zeilenlicht beleuchtet und zumindest einmal um seine Rotationsachse 20 senkrecht zu den Schichten gedreht. Dadurch werden beide Flachseiten vollständig abgetastet und können abgebildet werden. Für die Auswertung als solche ist die Abbildung grundsätzlich nicht zwingend erforderlich, aber zweckmäßig. Die Abbildungen sollen hier zudem das Verfahren veranschaulichen. Auf den Abbildungen der Flachseiten erscheinen die Fehler beispielsweise als Kontrastpunkte. In den Fig. 2a und 3a ist eine mögliche Abbildung der durch die Kamera 12 aufgenommen Seite 23a dargestellt, während in den Fig. 2b und 3b eine mögliche Abbildung der durch die Kamera 13 aufgenommenen Seite 23 b dargestellt ist.

Gemäß den Fig. 3a und 3b sind die aufgenommenen Bilder der Kameras 12 und 13 unabhängig voneinander abgebildet und ausgewertet worden. Es ist offensichtlich, daß die Abbildung 17a des Fehlers 17 in der Zwischenschicht 16 durch die eine Kamera 12 eine beliebige Position gemäß Fig. 3a relativ zu der Abbildung 17b desselben Fehlers 17 durch die andere Kamera 13 gemäß Fig. 3b einnimmt. Der Fehler erscheint daher wie die anderen Fehler 18 bzw. 19 in den jeweiligen äußeren Schichten 14 bzw. 15. Ein sicheres Klassifizieren dieses Fehlers 17 als Fehler der Zwischenschicht 16 ist offensichtlich nicht möglich.

Für eine eindeutige Erfassung eins Fehlers 17 in der Zwischenschicht 16 sind die optischen Empfänger 12, 13 über eine Zuordnungseinheit 21 gekoppelt, um die Daten der Bildpunkte der aufgenommen Bilder derart zuzuordnen, daß sich gegenüberliegende Punkte 22a und 22b des Gegenstandes auch als solche erkannt, abgebildet und/oder entsprechend ausgewertet werden können. Dadurch wird erreicht, daß sich die Abbildungen 17a, 17b des Fehlers 17 in der Zwischenschicht bei beiden Bildern sowohl durch die Kamera 12 als auch durch die Kamera 13 an der gleichen Position befinden. Dies ist in den Fig. 2a und 2b dargestellt, und es ist ersichtlich, daß hier die Abbildungen 17a und 17b des Fehlers 17 deckungsgleich sind. Grundsätzlich ist hier auch eine spiegelbildliche Zuordnung möglich.

Es ist offensichtlich, daß beim Auftreten eines Fehlers an exakt oder im wesentlichen exakt der gleichen Stelle des Gegenstandes auf beiden Seiten mit an Sicherheit grenzender Wahrscheinlichkeit ein Fehler in der Zwischenschicht vorliegt. Der Fehler kann daher auch als ein solcher erkannt, klassifiziert und entsprechend ausgewertet werden.

## Patentansprüche

1. Verfahren zur Inspektion eines im wesentlichen flächigen Gegenstandes, der wenigstens zwei gegenüberliegende zumindest teilweise transparente äußere Schichten (14, 15) und wenigstens eine zwischen diesen Schichten angeordnete Zwischenschicht (16) aufweist, gekennzeichnet durch folgende Schritte:
optisches Abtasten der sich gegenüberliegenden Seiten (23a, 23b) des Gegenstandes (11) mit wenigstens zwei optischen Empfängern (12, 13),
Zuordnen der Daten der aufgenommenen Bildpunkte des einen optischen Empfängers (12) zu den Daten der aufgenommenen Bildpunkten des anderen optischen Empfängers (13) derart, daß die Daten der sich gegenüberliegenden Punkte (22a, 22b) des Gegenstandes jeweils einander zugeordnet und ausgewertet werden können, und
Kennzeichnen eines möglichen Fehlers (17) in der Zwischenschicht (16), wenn bei beiden optischen Empfängern die Daten der sich gegenüberliegenden Bildpunkte einem Fehler entsprechen.

2. Verfahren nach Anspruch 1, dadurch gekennzeichnet, daß die optischen Empfänger bzw. die aufgenommenen Bilder eine vorbestimmte relative Ausrichtung zueinander oder zu einer Referenzlage aufweisen, wobei die Zuordnung der Daten der aufgenommen Bildpunkte durch eine Transformation der geometrischen Daten bezüglich der relativen Ausrichtung zueinander oder zu der Referenzlage erfolgt.

3. Verfahren nach Anspruch 1 oder 2, dadurch gekennzeichnet, daß das optische Abtasten durch beide optische Empfänger zeitgleich erfolgt

4. Verfahren nach Anspruch 1, dadurch gekennzeichnet, daß die optischen Empfänger derart synchron ausgerichtet sind, daß sich gegenüberliegende Punkte des Gegenstandes gleichzeitig abgetastet werden.

5. Verfahren nach Anspruch 1, dadurch gekennzeichnet, daß die sich gegenüberliegenden Seiten (23a, 23b) zeitlich oder geometrisch aufeinanderfolgend oder teilweise versetzt optisch abgetastet werden, wobei die aufgenommenen Bilddaten der einen Seite oder eines Bereichs dieser einen Seite zumindest solange gespeichert werden, bis die andere Seite oder der dem bereits abgetasteten Bereich der einen Seite gegenüberliegende Bereich der anderen Seite abgetastet sind, und daß dann die Bilddaten der sich gegenüberliegenden Punkte einander zugeordnet und ausgewertet werden.

6. Verfahren nach einem der Ansprüche 1 bis 5, dadurch gekennzeichnet, daß der Gegenstand ein optischer Datenträger, insbesondere eine DVD ist.

7. Verfahren nach einem der Ansprüche 1 bis 6, dadurch gekennzeichnet, daß die äußeren Schichten im wesentlichen durchsichtig sind.

8. Verfahren nach einem der Ansprüche 1 bis 7, dadurch gekennzeichnet, daß die Zwischenschicht eine zumindest teilweise reflektierende Schicht aufweist.

9. Verfahren nach einem der Ansprüche 1 bis 8, dadurch gekennzeichnet, daß die optischen Empfänger jeweils wenigstens ein lichtempfindliches Element mit einer Vielzahl von Pixeln aufweisen und so ausgerichtet sind, daß auf gleiche bzw. spiegelbildlich gleiche Pixel der lichtempfindlichen Elemente der optischen Empfänger sich gegenüberliegende Bildpunkte abgebildet werden.

10. Verfahren nach einem der Ansprüche 1 bis 9, dadurch gekennzeichnet, daß wenigstens ein optischer Empfänger ein zeilenförmiges lichtempfindliches Element aufweist.

11. Verfahren nach einem der Ansprüche 1 bis 10, dadurch gekennzeichnet, daß wenigstens ein optischer Empfänger ein matrixförmiges lichtempfindliches Element aufweist.

12. Verfahren nach einem der Ansprüche 1 bis 11, dadurch gekennzeichnet, daß die optischen Empfänger (12, 13) auf gegenüberliegenden Seiten (23a, 23b) des Gegenstandes (11) angeordnet sind.
